# FASCICULE DE BREVET EUROPEEN

(11) **EP 3 111 128 B1**
(45) Date de publication et mention de la délivrance du brevet: **29.08.2018**
(21) Numéro de dépôt: 14833507.8
(22) Date de dépôt: 18.12.2014
(51) Int. Cl.: G03B 15/00, F16M 11/42, G06K 7/10, G06K 9/46, G06T 11/60, H04N 5/232, G06T 7/73

(54) **ENSEMBLE ET PROCÉDÉ D'AIDE À LA PRISE DE VUES D'OBJETS PRÉSENTÉS SUR UN SUPPORT MOBILE ET AMOVIBLE**
ANORDNUNG UND VERFAHREN ZUR UNTERSTÜTZUNG BEIM ERHALT VON BILDERN EINES AUF EINEM MOBILEN UND ABNEHMBAREM TRÄGER ANGEZEIGTEN OBJEKTS
ASSEMBLY AND METHOD FOR ASSISTING IN OBTAINING IMAGES OF OBJECTS DISPLAYED ON A MOBILE AND REMOVEABLE SUPPORT

(30) Priorité: 20.12.2013 FR 1363292
(43) Date de publication de la demande: 04.01.2017
(73) Titulaire: Allure Systems, 75008 Paris (FR)
(72) Inventeur: ZYLBERBERG, Raphaël, F-63400 Chamalieres (FR); SENTILHES CHOU, Gabrielle, F-78000 Versailles (FR)
(74) Mandataire: Santarelli
(86) Numéro de dépôt international: PCT/FR2014/053424
(87) Numéro de publication internationale: WO 2015/092296

(56) Documents cités:
- DE-A1-102011 051 417
- GB-A- 2 464 742
- US-A1- 2003 038 801
- US-A1- 2005 154 487
- US-A1- 2008 262 944

## Description

### Domaine de l'invention

La présente invention concerne la prise de vues photographiques d'objets et plus particulièrement un ensemble et un procédé d'aide à la prise de vues d'objets présentés sur des supports mobiles et amovibles, permettant notamment de contrôler précisément la position des objets photographiés et de passer rapidement de la prise de vue d'un objet à celle d'un autre objet.

### Contexte de l'invention

La constitution de catalogue de présentation d'objets, par exemple de catalogues de vente de vêtements, nécessite un nombre de prises de vues photographiques généralement très importants. De façon traditionnelle, des mannequins s'habillent, des prises de vues sont effectuées, les mannequins se changent, d'autres prises de vues sont effectuées et ainsi de suite jusqu'à ce que toutes les prises de vues de tous les vêtements soient effectuées. Les photographies sont alors traitées puis mises en page dans un catalogue.

Bien que permettant d'obtenir le résultat escompté en termes de qualité photographique, le coût de ce procédé est particulièrement élevé du fait du temps nécessaire aux prises de vues, du recours aux mannequins et du traitement manuel des photographies.

Pour pallier à cet inconvénient, il existe des procédés selon lesquels des vêtements sont placés sur des supports mobiles, typiquement des mannequins artificiels, pour être photographiés. Un traitement de ces photographies est alors effectué pour extraire la partie de l'image représentant le vêtement photographié de son environnement. Dans une étape suivante, la partie d'image extraite, représentant le vêtement, est superposée à une photographie de mannequin pour « l'habiller ».

Il est observé ici que la pose du mannequin et la pose du mannequin artificiel portant le vêtement doivent être identique ou à tout le moins similaires pour permettre la superposition. L'image résultant de la superposition de l'image d'un mannequin et de l'image de vêtement peut alors être utilisée de façon identique à une photographie d'un mannequin portant le vêtement.

En outre, le support des objets à photographier peut être contrôlé par un ordinateur pour en contrôler la pose (i.e. position et orientation) et ainsi automatiser une partie de la chaine de prise de vues, c'est-à-dire, par conséquent, réduire le temps de prise de vue et donc les coûts associés.

Cependant, si un tel procédé permet de réaliser des catalogues de vente de vêtement pour des supports tels qu'Internet, la qualité et le réalisme ne sont généralement pas suffisants lorsque les photomontages sont automatiques ou trop onéreux lorsqu'ils sont manuels pour des catalogues imprimés ou des catalogues en ligne devant refléter une certaine qualité des produits présentés. Par ailleurs, la manipulation des mannequins artificiels ralentit le procédé et ajoute des coûts de manutention.

Il existe donc un besoin pour améliorer les procédés de prises de vues d'objets présentés sur un support.

### Résumé de l'invention

L'invention permet de résoudre au moins un des problèmes exposés précédemment.

L'invention a ainsi pour objet un ensemble d'aide à la prise de vues d'un objet, cet ensemble comprenant :
- un support mobile et amovible configuré pour recevoir ledit objet ;
- des moyens pour modifier la pose d'un élément, comprenant des moyens de fixation rigide par suspension dudit support, lesdits moyens pour modifier la pose d'un élément étant configurés pour modifier la pose dudit support lorsque ledit support est fixé auxdits moyens pour modifier la pose d'un élément ;
- des moyens de prise de vues configurés pour permettre l'obtention d'au moins une image représentant au moins une partie dudit support lorsque ledit support est fixé auxdits moyens pour modifier la pose d'un élément et au moins une partie d'un objet placé sur ledit support lorsque ledit support est fixé auxdits moyens pour modifier la pose d'un élément ; et
- des moyens de calcul configurés pour recevoir au moins une image desdits moyens de prise de vues, analyser au moins une image reçue et, en réponse à une analyse d'au moins une image reçue et d'une information de position prédéterminée, contrôler lesdits moyens pour modifier la pose d'un élément.

L'invention permet ainsi d'offrir une position précise d'un support mobile et amovible, permettant de gagner du temps entre différentes prises de vues d'objets distincts, lorsque ce support est mis en place et retiré de façon répétée. L'invention peut notamment être utilisée pour la création de photographies composites.

Selon un mode de réalisation particulier, ledit support comprend au moins un élément visuel de repérage fixé de façon rigide audit support. L'invention permet ainsi de faciliter, le cas échéant, l'ajustement de la pose du support.

Toujours selon un mode de réalisation particulier, ledit support comprend une partie saillante placée sur la partie supérieure dudit support, ladite partie saillante étant configurée pour coopérer avec une extrémité d'un arbre de transmission relié auxdits moyens pour modifier la pose d'un élément afin de fixer ledit support auxdits moyens pour modifier la pose d'un élément.

Toujours selon un mode de réalisation particulier, ladite partie saillante comprend au moins une protubérance apte à coopérer avec au moins une fente ouverte de ladite extrémité dudit arbre de transmission pour retenir ledit support en suspension. L'invention permet ainsi une mise en place et un retrait facile du support tout en permettant une position précise du support.

Toujours selon un mode de réalisation particulier, l'ensemble comprend en outre un élément de verrouillage pour maintenir rigidement ladite partie saillante contre ladite extrémité dudit arbre de transmission.

Toujours selon un mode de réalisation particulier, l'ensemble comprend en outre des moyens de rigidification coopérant avec une partie dudit arbre de transmission pour contraindre le mouvement dudit arbre de transmission selon au moins un mouvement prédéterminé.

Toujours selon un mode de réalisation particulier, l'ensemble comprend en outre des moyens de manipulation dudit support, lesdits moyens de manipulation permettant d'accrocher et décrocher ledit support auxdits moyens pour modifier la pose d'un élément sans portage ledit support.

L'invention a également pour objet un procédé d'aide à la prise de vues d'un objet à l'aide d'un ensemble d'aide à la prise de vues d'un objet tel que décrit précédemment, ce procédé comprenant les étapes suivantes :
- fixation d'un support mobile et amovible sur lequel est placé ledit objet auxdits moyens pour modifier la pose d'un élément dudit ensemble ;
- obtention d'au moins une image comprenant au moins une partie dudit objet et au moins une partie dudit support ;
- estimation de la pose dudit au moins un objet par analyse de ladite au moins une image obtenue; et
- contrôle desdits moyens pour modifier la pose d'un élément selon ladite pose estimée et une position prédéterminée.

L'invention permet ainsi d'offrir une position précise d'un support mobile et amovible, permettant de gagner du temps entre différentes prises de vues d'objets distincts, lorsque ce support est mis en place et retiré de façon répétée.

Selon un mode de réalisation particulier, l'étape de contrôle comprend en outre une étape de transmission d'une commande de modification de la pose dudit support selon ladite pose estimée et une position prédéterminée. L'invention permet ainsi d'ajuster précisément la pose du support.

Toujours selon un mode de réalisation particulier, le procédé comprend en outre une étape de mémorisation de ladite au moins une image obtenue.

Toujours selon un mode de réalisation particulier, le procédé comprend en outre une étape initiale d'obtention d'au moins une image de référence comprenant au moins une partie dudit support, la pose dudit support dans ladite image de référence étant identique à celle dudit support dans ladite au moins une image comprenant au moins une partie dudit objet et au moins une partie dudit support, et une étape d'extraction d'une représentation dudit objet de ladite au moins une image comprenant au moins une partie dudit objet et au moins une partie dudit support. L'invention permet ainsi l'automatisation de la création de photographies composites pouvant notamment être utilisées dans des catalogues.

Toujours selon un mode de réalisation particulier, le procédé comprend en outre une étape d'analyse de ladite représentation extraite dudit objet pour distinguer la représentation dudit objet des ombres dudit objet sur ledit support.

Toujours selon un mode de réalisation particulier, le procédé comprend en outre une étape de fusion de ladite représentation extraite dudit objet dans une photographie comprenant une représentation d'un support dont la pose est identique à celle dudit support dans ladite au moins une image comprenant au moins une partie dudit objet et au moins une partie dudit support.

L'invention a également pour objet un programme d'ordinateur comprenant des instructions adaptées à la mise en oeuvre de chacune des étapes du procédé décrit précédemment lorsque ledit programme est exécuté sur un ordinateur. Les avantages procurés par ce programme d'ordinateur sont similaires à ceux évoqués précédemment.

### Brève présentation des figures

D'autres avantages, buts et caractéristiques de la présente invention ressortent de la description détaillée qui suit, faite à titre d'exemple non limitatif, au regard des dessins annexés dans lesquels :
- la **figure 1** représente schématiquement un exemple de mise en oeuvre d'un mode de réalisation particulier de l'invention ;
- la **figure 2** représente la partie supérieure du portique illustré sur la figure 1, à laquelle est fixé un support mobile et amovible sur lequel est installé un objet à photographier ;
- la **figure 3****,** comprenant les figures 3a et 3b, illustre deux exemples de dispositifs de fixation verrouillables pour suspendre de façon rigide un support mobile et amovible à un portique ou à un élément d'un actionneur fixé à ce portique ;
- la **figure 4** illustre un exemple de chariot de manipulation permettant la mise en place et le retrait de supports mobiles et amovibles d'un portique utilisé pour des prises de vues d'objets placés sur de tels supports ;
- la **figure 5** illustre un exemple de mécanisme de déplacement vertical d'un élément d'accrochage d'un chariot de manipulation tel que celui illustré sur la figure 4 ;
- la **figure 6** représente un exemple d'un support mobile et amovible sur lequel est placé un objet à photographier, dans plusieurs positions ;
- la **figure 7** illustre certaines étapes d'une méthode de prise de vues mettant un oeuvre un mode de réalisation de l'invention ;
- la **figure 8** illustre certaines étapes d'une méthode de traitement d'images pour extraire une représentation d'un objet photographié sur un premier support mobile et amovible, par exemple un vêtement photographié sur un mannequin artificiel, et insérer cette représentation dans une image représentant un second support, par exemple une image d'un mannequin réel ; et
- la **figure 9** illustre un exemple de dispositif de traitement d'informations adapté à mettre en oeuvre, au moins partiellement, un mode de réalisation.

### Description détaillée de modes de réalisation de l'invention

Selon un mode de réalisation particulier, le dispositif d'aide à la prise de vues comprend notamment un portique permettant la suspension d'un support mobile et amovible sur lequel sont présentés les objets à photographier. Le portique comprend ici des actionneurs pour modifier, le cas échéant, la position du support. Ces actionneurs peuvent être commandés par un ordinateur pouvant également contrôler un dispositif de prise de vues.

Le support mobile et amovible est fixé de façon rigide aux actionneurs (ou au portique en l'absence d'actionneur) de telle sorte que sa position relative ne puisse être modifiée. Cependant, ce montage, procurant une liaison rigide, est tel qu'il permet une fixation et un retrait facile du support pour permettre de disposer et enlever facilement l'objet à photographier tout en permettant la prise de vues d'un autre objet sur un autre support pendant ce temps.

Le support mobile et amovible comprend ici un élément visuel de repérage, monté de façon solidaire avec le support, dont la pose peut être déterminée par analyse d'images. A ces fins, l'élément visuel de repérage est identifié sur une image puis comparé à un modèle numérique de cet élément visuel de repérage pour en déduire la pose. Un algorithme de calcul de pose, par exemple l'algorithme connu sous le nom de *Random Sample Consensus* (connu en France sous son abréviation RANSAC), peut être utilisé.

Ainsi, connaissant la pose relative de cet élément visuel de repérage par rapport à celle du support mobile et amovible et connaissant la pose de cet élément visuel de repérage dans un repère lié au dispositif utilisé pour obtenir l'image ou les images à partir desquelles la pose de cet élément visuel de repérage a été déterminée, il est possible d'en déduire la pose du support mobile et amovible. Il est ainsi possible, à l'aide des actionneurs et de l'élément visuel de repérage d'ajuster précisément la pose du support mobile et amovible selon une ou plusieurs poses prédéterminées.

La liaison rigide, par suspension, du support mobile et amovible aux actionneurs du portique utilisé permet de limiter tout mouvement intempestif de ce support lors de la prise de vues et, par conséquent, d'obtenir des photographies d'un objet placé sur un support dont la position est précisément ajustée.

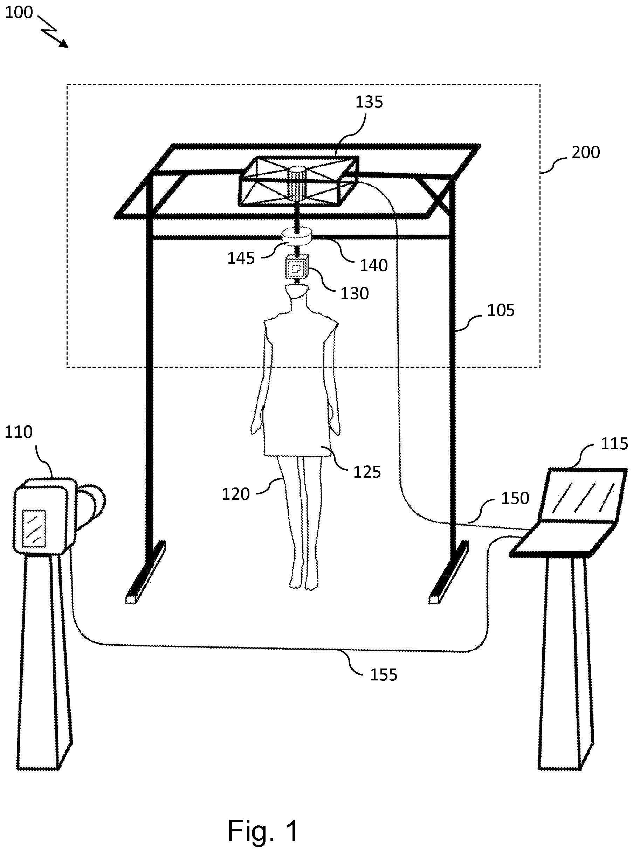

La **figure 1** représente schématiquement un exemple de mise en oeuvre d'un mode de réalisation particulier de l'invention.

Comme illustré, l'environnement 100 de prise de vues comprend un portique 105, un dispositif de prise de vues 110 tel qu'un appareil photographique ou une caméra vidéo, un ordinateur 115 et un support mobile et amovible 120 monté sur le portique 105. L'objet à photographier, ici une robe 125, est placé sur le support mobile et amovible 120. Ce dernier est ici un mannequin en résine.

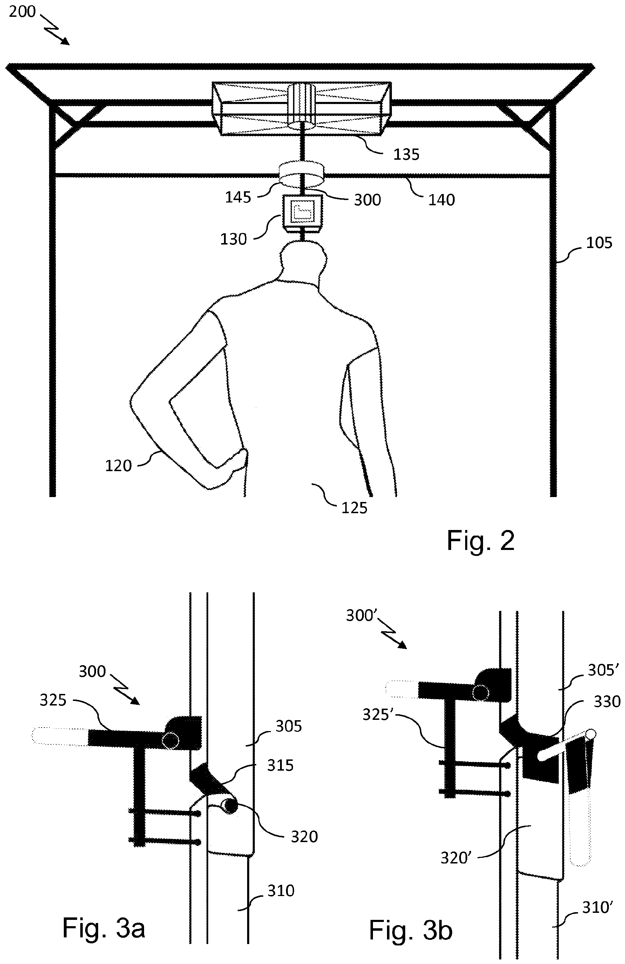

Le support mobile et amovible 120, comprenant un élément visuel de repérage 130, est ici fixé au portique 105 via un actionneur 135 qui peut notamment être moteur électrique 135, typiquement un moteur pas-à-pas, pouvant être contrôlé par l'ordinateur 115, comme illustré. Comme décrit en référence à la figure 3, le support mobile et amovible 120 est ici fixé à l'actionneur 135 à l'aide d'au moins un dispositif de fixation rigide et verrouillable (non représenté). L'actionneur 135 permet de modifier la pose du support mobile et amovible 120.

Selon le mode de réalisation illustré sur la figure 1, le dispositif de fixation rigide et verrouillable est situé en bout d'un arbre de transmission relié directement ou indirectement, par exemple à l'aide d'un réducteur, au moteur 135. La position de cet arbre de transmission est avantageusement contrainte à l'aide de rigidificateurs ou de supports, par exemple du support 140, ici un support muni d'un roulement à bille 145 à l'intérieur duquel passe l'arbre de transmission.

L'ordinateur 115 permet de contrôler le moteur 135, par exemple à l'aide d'une connexion filaire 150 ou à l'aide d'une connexion sans fil, par exemple une connexion conforme au standard WiFi ou Bluetooth (WiFi et Bluetooth sont des marques). De même, l'ordinateur 115 permet de contrôler le dispositif de prise de vues 110 à l'aide d'une connexion filaire 155 ou sans fil telle qu'une connexion conforme au standard WiFi ou Bluetooth.

L'ordinateur 115 peut être distant du moteur 135 et du dispositif de prise de vues 110 et relié à ces derniers via un réseau de communication tel qu'Internet.

La connexion entre l'ordinateur 115 et le dispositif de prise de vues 110 permet en outre, de préférence, à l'ordinateur 115 de recevoir des images obtenues par le dispositif de prise de vues 110. Ces images peuvent notamment être utilisées pour constituer un catalogue et/ou contrôler la pose du support mobile et amovible 120.

La **figure 2** représente la partie supérieure du portique illustré sur la figure 1, référencée 200, à laquelle est fixé le support mobile et amovible 120 sur lequel est installé l'objet à photographier.

Selon un mode de réalisation particulier, l'élément visuel de repérage 130 est un cube dont les faces latérales sont pourvues de dessins géométriques différents (ou orientés différemment) permettant de déterminer précisément la position du cube (et incidemment du support mobile et amovible).

La **figure 3****,** comprenant les figures 3a et 3b, illustre deux exemples de dispositifs de fixation verrouillables 300 et 300' pour suspendre de façon rigide un support mobile et amovible à un portique ou à un élément d'un actionneur fixé à ce portique.

Selon l'exemple illustré sur la figure 3a, le support mobile et amovible est suspendu, de façon amovible, à un arbre de transmission tubulaire 305 relié, de façon directe ou indirecte à un actionneur. A ces fins, le support mobile et amovible comprend ici, dans sa partie supérieure, une tige (ou un tube) 310 dont la section a la même forme que celle de l'arbre de transmission 305 et dont la dimension extérieure correspond sensiblement à la dimension intérieure de l'arbre de transmission 305 (ici, tubulaire) de telle sorte que la tige 310 et l'arbre de transmission 305 s'emboîtent l'un dans l'autre. Naturellement, un montage inverse (selon lequel la dimension intérieure de la tige 310, ici tubulaire, correspondrait sensiblement à la dimension extérieure de l'arbre de transmission 305) pourrait être mis en oeuvre.

La section de l'arbre de transmission est ici de forme carrée pour éviter un déplacement par rotation autour de l'axe de cet arbre. D'autres formes peuvent être utilisées.

Elle est ici ouverte sur un côté pour faciliter l'emboîtement de la tige 310 et comprend, sur deux côtés opposés, une fente ouverte 315 adaptée à coopérer avec des ergots 320 (ou plus généralement des protubérances) de la tige 310 pour bloquer cette dernière, comme illustré, afin de retenir le support mobile et amovible en suspension.

En outre, un élément de fixation ou de serrage 325, par exemple de type serre-joint, est avantageusement utilisé pour verrouiller le montage de la tige 310 et de l'arbre de transmission 305. Comme illustré sur la figure 3a, l'élément de fixation ou de serrage 325 peut être fixé à l'arbre de transmission 305 et venir, dans une position fermée, presser la tige 310 contre une paroi de l'arbre de transmission 305.

La coopération de l'arbre de transmission 305 et de la tige 310 à l'aide des fentes 315 et ergots 320 permet un positionnement précis du support mobile et amovible comprenant la tige 310 par rapport à l'arbre de transmission 305. L'élément de fixation ou de serrage 325 permet d'éviter une modification ultérieure de cette position.

Un tel montage permet une manipulation aisée d'un support mobile et amovible qui peut ainsi être mis en place et retiré facilement tout en permettant de retrouver précisément une position prédéterminée.

De façon similaire, le support mobile et amovible illustré sur la figure 3b est suspendu, de façon amovible, à un arbre de transmission tubulaire 305' relié, de façon directe ou indirecte à un actionneur. A nouveau, le support mobile et amovible comprend, dans sa partie supérieure, une tige (ou un tube) 310' dont la section a la même forme que celle de l'arbre de transmission tubulaire 305' et dont la dimension extérieure correspond sensiblement à la dimension intérieure de l'arbre de transmission tubulaire 305' de telle sorte que la tige 310' et l'arbre de transmission tubulaire 305' s'emboîtent l'un dans l'autre. Une fois encore, un montage inverse pourrait être mis en oeuvre.

La section de l'arbre de transmission est ici de forme carrée pour éviter un déplacement par rotation autour de l'axe de cet arbre. D'autres formes peuvent être utilisées.

Elle est ici également ouverte sur un côté pour faciliter l'emboîtement de la tige 310' et comprend, sur deux côtés opposés, une fente ouverte adaptée à coopérer avec des ergots (ou plus généralement des protubérances) de la tige 310', non visibles, pour bloquer cette dernière, comme illustré sur la figure 3a, afin de retenir le support mobile et amovible en suspension.

En outre, plusieurs éléments de fixation ou de serrage sont utilisés pour verrouiller le montage de la tige 310' et de l'arbre de transmission 305'. Comme illustré sur la figure 3b, un premier élément de fixation ou de serrage 325' est ici fixé à l'arbre de transmission 305' et vient, dans une position fermée, presser la tige 310' contre une paroi de l'arbre de transmission 305'. Un second élément de fixation ou de serrage 330 est ici également fixé à l'arbre de transmission 305' et vient, dans une position fermée, exercer une pression sur les ergots (ou protubérances) de la tige 310', à l'endroit où ils se glissent dans les fentes formées dans l'arbre de transmission 305'.

La mise en oeuvre de ces deux éléments de fixation permet de réduire de façon substantielle, voire supprimer, le jeu possible entre l'arbre de transmission 305' et la tige 310' du fait de la pression exercée latéralement par le second élément de fixation et de la pression exercée de front par le premier élément de fixation.

La coopération de l'arbre de transmission 305' et de la tige 310' à l'aide des fentes 315' et ergots 320' permet un positionnement précis du support mobile et amovible comprenant la tige 310' par rapport à l'arbre de transmission 305'. Les éléments de fixation ou de serrage 325' et 330 permettent d'éviter une modification ultérieure de cette position.

A nouveau, un tel montage permet une manipulation aisée d'un support mobile et amovible qui peut ainsi être mis en place et retiré facilement tout en permettant de retrouver précisément une position prédéterminée.

Selon un mode de réalisation particulier, un chariot de manipulation permet le déplacement du support mobile et amovible afin de faciliter sa mise en place et son retrait du portique 105.

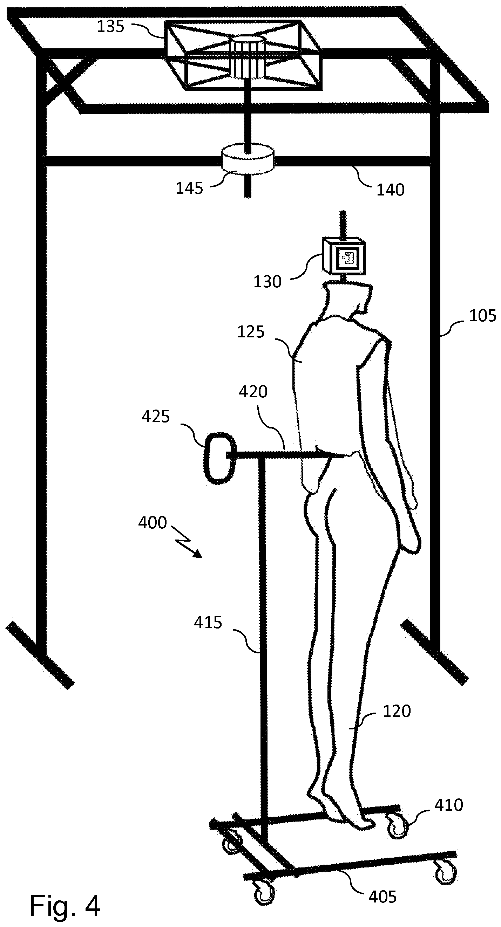

La **figure 4** illustre un exemple de chariot de manipulation 400 permettant la mise en place et le retrait de supports mobiles et amovibles d'un portique utilisé pour des prises de vues d'objets placés sur de tels supports.

Comme illustré, le chariot de manipulation 400 comprend une structure de base 405 assurant sa stabilité. Cette structure de base 405 comprend ici des roulettes 410, par exemple quatre roulettes, permettant son déplacement sans effort particulier. Dans d'autres modes de réalisation, un nombre différent de roulettes, par exemple deux ou trois, est utilisé.

Le chariot de manipulation 400 comprend en outre une structure verticale 415 sur laquelle est monté un élément d'accrochage 420, sensiblement horizontale, permettant la fixation d'un support mobile et amovible 120. Selon un mode de configuration particulier, l'élément d'accrochage 420 consiste essentiellement en une tige horizontale apte à coopérer avec un point d'accrochage consistant par exemple en une cavité du support mobile et amovible 120 (placée au-dessus du centre de gravité et de telle façon à assurer la stabilité de ce support lorsqu'il est placé sur le chariot de manipulation 400).

Toujours selon un mode de réalisation particulier, le chariot de manipulation 400 comprend un mécanisme de déplacement vertical de l'élément d'accrochage 420 conférant au moins deux positions à ce dernier, une position de repos et une position de mise en place et de retrait. Dans la position de repos, l'élément d'accrochage 420 est situé sensiblement à la même hauteur que le point d'accrochage du support mobile et amovible 120 lorsque celui-ci est fixé au portique 105. Dans la position de mise en place et de retrait, l'élément d'accrochage 420 est situé à une hauteur telle que, lorsque le support mobile et amovible est fixé à cet élément d'accrochage, les ergots 320 de la tige 310 peuvent s'engager dans les fentes 315 ou s'en dégager.

Le chariot de manipulation 400 comprend en outre, dans l'exemple illustré, une poignée 425 pour faciliter sa manutention.

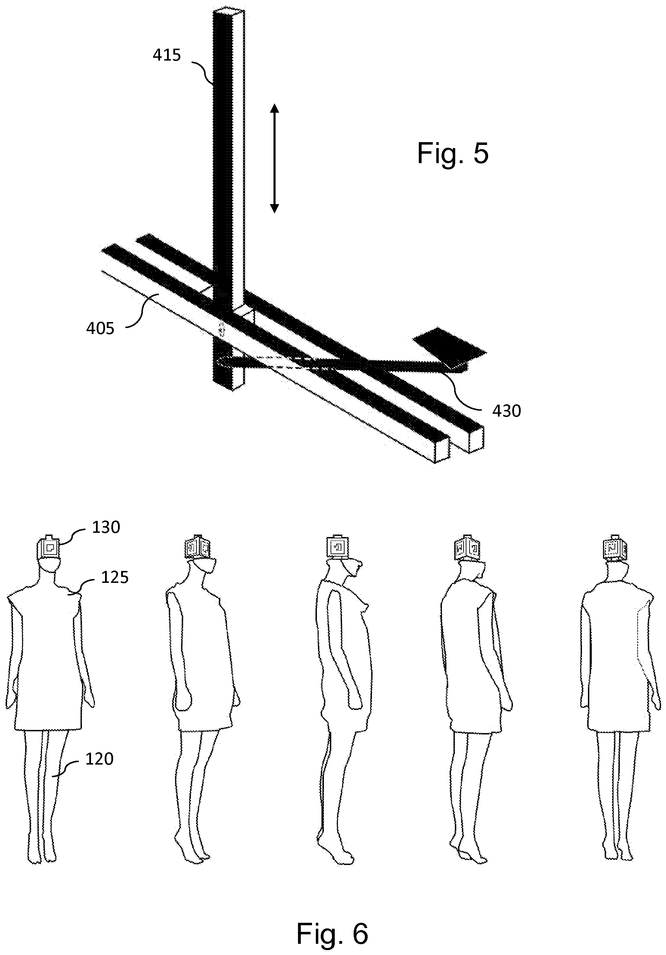

La **figure 5** illustre un exemple de mécanisme de déplacement vertical d'un élément d'accrochage d'un chariot de manipulation tel que celui illustré sur la figure 4.

Comme illustré, la structure de base 405 comprend ici une cavité sensiblement verticale dans laquelle peut coulisser verticalement la structure verticale 415. Cette dernière est reliée à un levier 430 dont l'axe de levier est solidaire de la structure de base 405. Ainsi, lorsqu'un opérateur appui sur le levier 430, par exemple avec son pied, la structure verticale 415 est entraînée vers le haut, avec l'élément d'accrochage 420, permettant d'engager les ergots 320 des fentes 315 ou de désengager.

La **figure 6** représente un exemple d'un support mobile et amovible sur lequel est placé un objet à photographier dans plusieurs positions.

Ces positions sont ici contrôlées par l'ordinateur 115 selon des angles prédéterminés à partir de l'analyse de la représentation de l'élément visuel de repérage 130, solidairement fixé au support mobile et amovible, dans des images acquises via le dispositif 110.

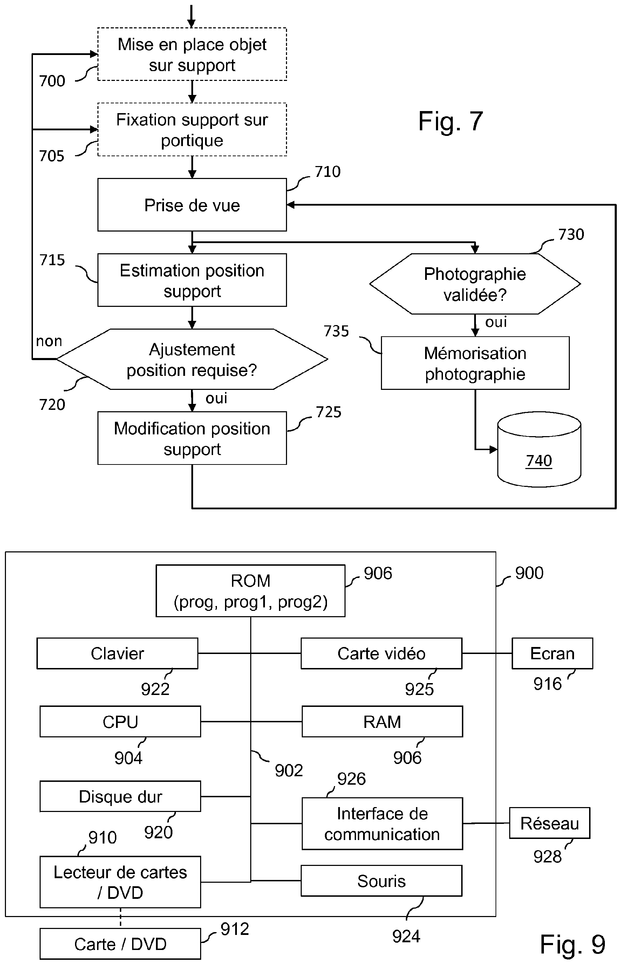

La **figure 7** illustre certaines étapes d'une méthode de prise de vues mettant un oeuvre un mode de réalisation de l'invention.

Comme illustré, une première étape (étape 700) consiste à mettre en place un objet à photographier sur un support mobile et amovible. Le support est ensuite fixé au portique, de préférence via un ou plusieurs actionneurs, à l'aide de moyens de fixation permettant une liaison rigide comme décrit précédemment (étape 705). Ces étapes sont typiquement réalisées par un opérateur, comme suggéré par l'utilisation de traits pointillés.

Dans une étape suivante, une prise de vue est effectuée (étape 710). L'image acquise est alors analysée pour déterminer la pose du support à partir de celle d'un élément visuel de repérage dont l'image acquise comprend une représentation (étape 715). Un test est ensuite effectué pour déterminer s'il convient ou non d'ajuster la position du support (étape 720).

A titre d'illustration, il convient d'ajuster la position du support si la position ne correspond pas précisément à une position prédéfinie ou si une nouvelle prise du vue du même objet doit être effectuée selon une pose différente.

Dans l'affirmative, une nouvelle position est estimée et une commande correspondante est adressée à un ou plusieurs actionneurs pour modifier la position du support en conséquence (étape 725). Une nouvelle image est alors acquise et les étapes décrites précédemment sont répétées (étapes 710 et suivantes).

Dans le cas contraire, s'il n'est pas nécessaire de modifier la position, un nouvel objet est mis en place sur un support mobile et amovible et/ou un support mobile et amovible sur lequel est placé un objet à photographier est fixer au portique via un ou plusieurs actionneurs (étapes 700 et/ou 705). Alternativement, il est mis fin au procédé si aucune nouvelle prise de vues n'est nécessaire.

Après avoir effectué une prise de vue (étape 710), un test est effectué (étape 730) pour déterminer s'il convient ou non de mémoriser la photographie réalisée, par exemple pour l'utiliser ultérieurement pour la création d'un catalogue. Dans l'affirmative, la photographie est mémorisée (étape 735), par exemple dans une base de donnée 740. Un test peut également être effectué pour ne mémoriser la photographie que si la pose du support mobile et amovible est conforme à une pose prédéterminée.

Il est observé ici que, selon un mode de réalisation particulier, la photographie réalisée peut être traitée avant d'être mémorisée, par exemple pour extraire un vêtement installé sur le support mobile et amovible. Il est également possible de mémoriser la photographie originale et la photographie traitée.

Toujours selon un mode de réalisation particulier, plusieurs photographies peuvent être réalisées pour une pose donnée en faisant varier, par exemple, l'éclairage.

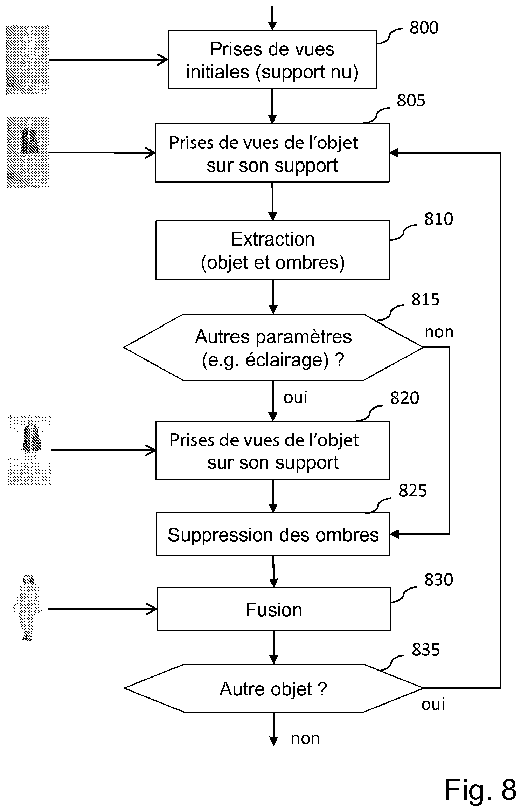

La **figure 8** illustre certaines étapes d'une méthode de traitement d'images pour extraire une représentation d'un objet photographié sur un premier support mobile et amovible, par exemple un vêtement photographié sur un mannequin artificiel, et insérer cette représentation dans une image représentant un second support, par exemple une photographie d'un mannequin réel.

Une première étape (étape 800) a ici pour objet la prise d'une ou plusieurs vues initiales du support mobile et amovible seul (i.e. sans l'objet à photographier) selon une ou plusieurs poses prédéterminées, c'est-à-dire d'images de référence du support mobile et amovible. Ces prises de vues sont effectuées selon des conditions standard (notamment des conditions d'éclairage), c'est-à-dire des conditions dans lesquelles des objets devront être photographiés ultérieurement.

La ou les poses du support mobile et amovible sont avantageusement ajustées en utilisant un élément visuel de repérage rigidement associé au support mobile et amovible et un algorithme tel que celui décrit en référence à la figure 7 (sans placer l'objet sur le support).

L'étape de prises de vues initiales peut appartenir à une étape de calibration. Elle est effectuée de façon périodique, par exemple en début de chaque cycle de prises de vue, ou lorsque les conditions de prises de vue changent.

Dans une étape suivante (étape 805), une ou plusieurs prises de vues de l'objet placé sur le support mobile et amovible sont effectuées pour une ou plusieurs poses prédéterminées correspondant à toutes ou à une partie des poses utilisées pour la ou les prises de vues du support mobile et amovible seul (étape 800). Les conditions de prises de vues, en particulier les conditions d'éclairage, sont ici identiques (ou très proches) de celles utilisées pour les prises de vues du support mobile et amovible seul.

A nouveau, la ou les poses du support mobile et amovible sur lequel est placé l'objet à photographier sont avantageusement ajustées en utilisant un élément visuel de repérage rigidement associé au support mobile et amovible et un algorithme tel que celui décrit en référence à la figure 7.

L'objet photographié est ensuite extrait (étape 810) par comparaison de deux photographies, l'une du support mobile et amovible seul, l'autre du support mobile et amovible sur lequel est placé l'objet, correspondant à une même pose. Cette extraction, typiquement effectuée par une soustraction pixel à pixel, permet d'obtenir l'objet photographié et son ombre, sans support ni élément d'arrière-plan.

Un test est ensuite effectué (étape 815) pour déterminer si d'autres prises de vues de l'objet doivent être effectuées sous d'autres conditions, notamment d'éclairage. De telles prises de vues peuvent être nécessaires, dans une étape ultérieure, pour permettre de distinguer l'objet de ses ombres, en fonction de l'algorithme utilisé.

De nouvelles prises de vues sont effectuées si nécessaire (étape 820). A nouveau encore, la ou les poses du support mobile et amovible sur lequel est placé l'objet à photographier sont avantageusement ajustées en utilisant un élément visuel de repérage rigidement associé au support mobile et amovible et un algorithme tel que celui décrit en référence à la figure 7.

Dans une étape suivante, l'image résultant de la comparaison de deux photographies, l'une du support mobile et amovible seul, l'autre du support mobile et amovible sur lequel est placé l'objet, correspondant à une même pose, est analysée pour permettre de différencier l'objet de son ombre (étape 825).

A ces fins, différents algorithmes peuvent être utilisés.

Selon un algorithme connu sous le nom de *Color Normalized Cross Correlation,* décrit, par exemple, dans l'article intitulé « A color similarity measure for robust shadow removal in real-time », Grest et al., VMV 2003, la couleur et son intensité sont utilisées pour calculer les ombres. A ces fins, une photographie du support mobile et amovible sans l'objet qui crée les ombres, par exemple un mannequin artificiel sans vêtement, et une photographie du support mobile et amovible sur lequel est placé l'objet, réalisées selon la même pose et dans les mêmes conditions, notamment d'éclairage, sont utilisées. Les ombres sur le support mobile et amovible sont les zones où la couleur est exactement la même dans les deux photographies mais avec des intensités différentes.

Selon un autre algorithme, décrit, par exemple, dans l'article intitulé « Shadow removal via flash/noflash illumination », Lu et al., la détection des ombres est effectuée en utilisant deux photographies de l'objet sur son support photographie, l'une prise avec un flash puissant et l'autre sans. La photographie avec le flash puissant exagère les ombres qui deviennent plus facile à détecter.

D'autres algorithmes peuvent être utilisés.

Lorsque l'objet et ses ombres ont été extraits, ils peuvent être ajoutés (étape 830) sur une photographie représentant un autre support, par exemple un mannequin réel dont la pose est identique à celle du support mobile et amovible, utilisée pour extraire l'objet et ses ombres. Cette fusion est typiquement réalisée en remplaçant les pixels de la photographie représentant l'autre support par ceux de l'objet et en combinant les pixels de la photographie représentant l'autre support avec ceux des ombres (c'est-à-dire en appliquant un coefficient de transparence aux ombres).

Un test est alors effectué pour déterminer si d'autres objets doivent être photographiés et/ou traités. Dans l'affirmative, les étapes 805 à 830 sont répétées.

Il est observé ici que les étapes 810, 825 et 830 peuvent être mises en oeuvre à partir de photographies préalablement prises et reçues d'une mémoire de stockage (par exemple une base de données).

La **figure 9** illustre un exemple de dispositif pouvant être utilisé pour mettre en oeuvre, au moins partiellement, un mode de réalisation, notamment des étapes décrites en référence aux figures 7 et 8. Le dispositif 900 est par exemple l'ordinateur 115 illustré sur la figure 1.

Le dispositif 900 comporte de préférence un bus de communication 902 auquel sont reliés :
- une unité centrale de traitement ou microprocesseur 904 (CPU, sigle de *Central Processing Unit en* terminologie anglo-saxonne) ;
- une mémoire morte 906 (ROM, acronyme de *Read Only Memory* en terminologie anglo-saxonne) pouvant comporter le système d'exploitation et des programmes tels que "Prog" ;
- une mémoire vive ou mémoire cache 908 (RAM, acronyme de *Random Access Memory* en terminologie anglo-saxonne) comportant des registres adaptés à enregistrer des variables et paramètres créés et modifiés au cours de l'exécution des programmes précités ;
- un lecteur 910 de support amovible de stockage 912 tel qu'une carte mémoire ou un disque, par exemple un disque DVD ; et
- une carte graphique 914 reliée à un écran 916.

Optionnellement, le dispositif 900 peut également disposer des éléments suivants :
- un disque dur 920 pouvant comporter les programmes "Prog" précités et des données traitées ou à traiter selon l'invention ;
- un clavier 922 et une souris 924 ou tout autre dispositif de pointage comme un crayon optique, un écran tactile ou une télécommande permettant à l'utilisateur d'interagir avec les programmes selon l'invention, en particulier pour sélectionner des positions du support mobile et amovible sur lequel est disposé un objet à photographier et prendre des photographies ; et
- une interface de communication 926 reliée à un réseau de communication distribué 928, par exemple le réseau Internet, l'interface étant apte à transmettre et à recevoir des données.

Le bus de communication permet la communication et l'interopérabilité entre les différents éléments inclus dans le dispositif 900 ou reliés à lui. La représentation du bus n'est pas limitative et, notamment, l'unité centrale est susceptible de communiquer des instructions à tout élément du dispositif 900 directement ou par l'intermédiaire d'un autre élément du dispositif 900.

Le code exécutable de chaque programme permettant à l'appareil programmable de mettre en oeuvre les processus selon l'invention, peut être stocké, par exemple, dans le disque dur 920 ou en mémoire morte 906.

Selon une variante, le code exécutable des programmes pourra être reçu par l'intermédiaire du réseau de communication 928, via l'interface 926, pour être stocké de façon identique à celle décrite précédemment.

De manière plus générale, le ou les programmes pourront être chargés dans un des moyens de stockage du dispositif 900 avant d'être exécutés.

L'unité centrale 904 va commander et diriger l'exécution des instructions ou portions de code logiciel du ou des programmes selon l'invention, instructions qui sont stockées dans le disque dur 920 ou dans la mémoire morte 906 ou bien dans les autres éléments de stockage précités. Lors de la mise sous tension, le ou les programmes qui sont stockés dans une mémoire non volatile, par exemple le disque dur 920 ou la mémoire morte 906, sont transférés dans la mémoire vive 908 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente. La présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention ne se limite pas aux formes de réalisation présentées. D'autres variantes et modes de réalisation peuvent être déduits et mis en oeuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Ensemble d'aide à la prise de vues d'un objet (125), ledit ensemble comprenant :
- un support mobile et amovible (120) configuré pour recevoir ledit objet ;
- des moyens (135) pour modifier la pose d'un élément, comprenant des moyens de fixation rigide par suspension (300) dudit support, lesdits moyens pour modifier la pose d'un élément étant configurés pour modifier la pose dudit support lorsque ledit support est fixé auxdits moyens pour modifier la pose d'un élément ;
- des moyens de prise de vues (110) configurés pour permettre l'obtention d'au moins une image représentant au moins une partie dudit support lorsque ledit support est fixé auxdits moyens pour modifier la pose d'un élément et au moins une partie d'un objet placé sur ledit support lorsque ledit support est fixé auxdits moyens pour modifier la pose d'un élément ; et
- des moyens de calcul (115) configurés pour recevoir au moins une image desdits moyens de prise de vues, analyser au moins une image reçue et, en réponse à une analyse d'au moins une image reçue et d'une information de position prédéterminée, contrôler lesdits moyens pour modifier la pose d'un élément.

2. Ensemble selon la revendication 1 selon lequel ledit support comprend au moins un élément visuel de repérage (130) fixé de façon rigide audit support.

3. Ensemble selon la revendication 1 ou la revendication 2 selon lequel ledit support comprend une partie saillante (310) placée sur la partie supérieure dudit support, ladite partie saillante étant configurée pour coopérer avec une extrémité d'un arbre de transmission (305) relié auxdits moyens pour modifier la pose d'un élément afin de fixer ledit support auxdits moyens pour modifier la pose d'un élément.

4. Ensemble selon la revendication 3 selon lequel ladite partie saillante comprend au moins une protubérance (320) apte à coopérer avec au moins une fente ouverte (315) de ladite extrémité dudit arbre de transmission pour retenir ledit support en suspension.

5. Ensemble selon la revendication 3 ou la revendication 4 comprenant en outre un élément de verrouillage (325) pour maintenir rigidement ladite partie saillante contre ladite extrémité dudit arbre de transmission.

6. Ensemble selon l'une quelconque des revendications 3 à 5 comprenant en outre des moyens de rigidification coopérant avec une partie dudit arbre de transmission pour contraindre le mouvement dudit arbre de transmission selon au moins un mouvement prédéterminé.

7. Ensemble selon l'une quelconque des revendications 1 à 6 comprenant en outre des moyens de manipulation (400) dudit support, lesdits moyens de manipulation permettant d'accrocher et décrocher ledit support auxdits moyens pour modifier la pose d'un élément sans portage ledit support.

8. Procédé d'aide à la prise de vues d'un objet à l'aide d'un ensemble d'aide à la prise de vues d'un objet selon l'une quelconque des revendications 1 à 7, ce procédé comprenant les étapes suivantes :
- fixation (705) d'un support mobile et amovible sur lequel est placé ledit objet auxdits moyens pour modifier la pose d'un élément dudit ensemble ;
- obtention (710) d'au moins une image comprenant au moins une partie dudit objet et au moins une partie dudit support ;
- estimation (715) de la pose dudit au moins un objet par analyse de ladite au moins une image obtenue ; et
- contrôle desdits moyens pour modifier la pose d'un élément selon ladite pose estimée et une position prédéterminée.

9. Procédé selon la revendication 8 selon lequel ladite étape de contrôle comprend une étape de transmission (715) d'une commande de modification de la pose dudit support selon ladite pose estimée et une position prédéterminée.

10. Procédé selon la revendication 8 ou la revendication 9 comprenant en outre une étape de mémorisation (735) de ladite au moins une image obtenue.

11. Procédé selon l'une quelconque des revendications 8 à 10 comprenant en outre une étape initiale d'obtention (800) d'au moins une image de référence comprenant au moins une partie dudit support, la pose dudit support dans ladite image de référence étant identique à celle dudit support dans ladite au moins une image comprenant au moins une partie dudit objet et au moins une partie dudit support, et une étape d'extraction (810) d'une représentation dudit objet de ladite au moins une image comprenant au moins une partie dudit objet et au moins une partie dudit support.

12. Procédé selon la revendication 11 comprenant en outre une étape d'analyse (825) de ladite représentation extraite dudit objet pour distinguer la représentation dudit objet des ombres dudit objet sur ledit support.

13. Procédé selon la revendication 11 ou la revendication 12 comprenant en outre une étape de fusion (830) de ladite représentation extraite dudit objet dans une photographie comprenant une représentation d'un support dont la pose est identique à celle dudit support dans ladite au moins une image comprenant au moins une partie dudit objet et au moins une partie dudit support.

14. Programme d'ordinateur comprenant des instructions adaptées à la mise en oeuvre de chacune des étapes du procédé selon l'une quelconque des revendications 8 à 13 lorsque ledit programme est exécuté sur un ordinateur.

## Patentansprüche

1. Anordnung zum Unterstützen bei der Bildaufnahme von einem Objekt (125), wobei die Anordnung umfasst:
- einen beweglichen und abnehmbaren Träger (120), der dazu ausgelegt ist, das Objekt aufzunehmen;
- Einrichtungen (135) zum Ändern der Stellung eines Elements, enthaltend Einrichtungen (300) zum starren Befestigen des Trägers durch Aufhängen, wobei die Einrichtungen zum Ändern der Stellung eines Elements dazu ausgelegt sind, die Stellung des Trägers dann zu ändern, wenn der Träger an die Einrichtungen zum Ändern der Stellung eines Elements befestigt ist;
- Einrichtungen zur Bildaufnahme (110), die dazu ausgelegt sind, das Erhalten zumindest einer Abbildung zu gestatten, die zumindest einen Teil des Trägers darstellt, wenn der Träger an die Einrichtungen zum Ändern der Stellung eines Elements befestigt ist, sowie zumindest einen Teil eines Objekts, das an dem Träger positioniert ist, wenn der Träger an den Einrichtungen zum Ändern der Stellung eines Elements befestigt ist; und
- Recheneinrichtungen (115), die dazu ausgelegt sind, zumindest eine Abbildung von den Einrichtungen zur Bildaufnahme zu empfangen, zumindest eine empfangende Abbildung zu analysieren und in Reaktion auf eine Analyse zumindest einer empfangenden Abbildung und einer vorbestimmen Positionsinformation die Einrichtungen zum Ändern der Stellung eines Elements anzusteuern.

2. Anordnung nach Anspruch 1, wobei der Träger zumindest ein visuelles Orientierungselement (130) umfasst, das in starrer Weise an den Träger befestigt ist.

3. Anordnung nach Anspruch 1 oder Anspruch 2, wobei der Träger einen vorspringenden Abschnitt (310) umfasst, der am oberen Teil des Trägers positioniert ist, wobei der vorspringende Abschnitt dazu ausgelegt ist, mit einem Ende einer Übertragungswelle (305) zusammenzuwirken, die mit den Einrichtungen zum Ändern der Stellung eines Elements verbunden ist, um den Träger an die Einrichtungen zum Ändern der Stellung eines Elements zu befestigen.

4. Anordnung nach Anspruch 3, wobei der vorspringende Abschnitt zumindest einen Vorsprung (320) umfasst, der dazu geeignet ist, mit zumindest einem offenen Spalt (315) des Endes der Übertragungswelle zusammenzuwirken, um den Träger aufgehängt zu halten.

5. Anordnung nach Anspruch 3 oder Anspruch 4, ferner umfassend ein Verriegelungselement (325) zum starren Halten des vorspringenden Abschnitts gegen das Ende der Übertragungswelle.

6. Anordnung nach einem der Ansprüche 3 bis 5, ferner umfassend Versteifungseinrichtungen, die mit einem Teil der Übertragungswelle zusammenwirken, um die Bewegung der Übertragungswelle gemäß zumindest einer vorbestimmten Bewegung zu erzwingen.

7. Anordnung nach einem der Ansprüche 1 bis 6, ferner umfassend Handhabungseinrichtungen (400) zum Handhaben des Trägers, wobei die Handhabungseinrichtungen ermöglichen, den Träger an den Einrichtungen zum Ändern der Stellung eines Elements ohne Abstützung des Trägers einzuhaken und auszuhaken.

8. Verfahren zum Unterstützen bei der Bildaufnahme von einem Objekt mit Hilfe einer Anordnung zum Unterstützen bei der Bildaufnahme von einem Objekt nach einem der Ansprüche 1 bis 7, wobei dieses Verfahren die nachfolgenden Schritte umfasst:
- Befestigen (705) eines beweglichen und abnehmbaren Trägers, an dem das Objekt positioniert worden ist, an den Einrichtungen zum Ändern der Stellung eines Elements der Anordnung;
- Erhalten (710) zumindest einer Abbildung, die zumindest einen Teil des Objekts und zumindest einen Teil des Trägers umfasst;
- Abschätzen (715) der Stellung des zumindest einen Objekts durch Analyse der zumindest einen erhaltenen Abbildung; und
- Ansteuern der Einrichtungen zum Ändern der Stellung eines Elements gemäß der geschätzten Stellung und einer vorbestimmten Position.

9. Verfahren nach Anspruch 8, wobei der Schritt des Ansteuerns einen Schritt (715) der Übertragung eines Änderungsbefehls zum Ändern der Stellung des Trägers gemäß der geschätzten Stellung und einer vorbestimmten Position umfasst.

10. Verfahren nach Anspruch 8 oder Anspruch 9, ferner umfassend einen Schritt (735) des Abspeicherns der zumindest einen erhaltenen Abbildung.

11. Verfahren nach einem der Ansprüche 8 bis 10, ferner umfassend einen anfänglichen Schritt (800) des Erhaltens von zumindest einer Referenzabbildung, die zumindest einen Teil des Trägers umfasst, wobei die Stellung des Trägers in der Referenzabbildung identisch ist zu derjenigen des Trägers in der zumindest einen Abbildung, die zumindest einen Teil des Objekts und zumindest einen Teil des Trägers umfasst, sowie einen Extraktionsschritt (810) zum Extrahieren einer Darstellung des Objekts von der zumindest einen Abbildung, die zumindest einen Teil des Objekts und zumindest einen Teil des Trägers umfasst.

12. Verfahren nach Anspruch 11, ferner umfassend einen Schritt (825) der Analyse der extrahierten Darstellung des Objekts, um die Darstellung des Objekts von den Schatten des Objekts an dem Träger zu unterscheiden.

13. Verfahren nach Anspruch 11 oder Anspruch 12, ferner umfassend einen Schritt (830) der Fusion der extrahierten Darstellung des Objekts in einer Fotografie, die eine Darstellung eines Trägers umfasst, dessen Stellung identisch zu derjenigen des Trägers in der zumindest einen Abbildung ist, die zumindest einen Teil des Objekts und zumindest einen Teil des Trägers umfasst.

14. Computerprogramm, umfassend Anweisungen, die dazu ausgelegt sind, jeden der Schritte des Verfahrens nach einem der Ansprüche 8 bis 13 durchzuführen, wenn das Programm auf einem Computer ausgeführt wird.

## Claims

1. A set for assisting in the shooting of images of an object (125), said set comprising:
- a mobile removable support (120) configured to receive said object;
- means (135) for modifying the pose of a member, comprising means for rigid fastening by suspension (300) of said support, said means for modifying the pose of a member being configured to modify the pose of said support when said support is fastened to said means for modifying the pose of a member;
- image shooting means (110) configured to enable at least one image to be obtained representing at least part of said support when said support is fastened to said means for modifying the pose of a member and at least part of an object placed on said support when said support is fastened to said means for modifying the pose of a member; and
- computing means (115) configured for receiving at least one image from said image shooting means, analyzing at least one received image and, in response to an analysis of at least one received image and predetermined position information, controlling said means for modifying the pose of a member.

2. A set according to claim 1, wherein said support comprises at least one visual positioning element (130) which is rigidly fastened to said support.

3. A set according to claim 1 or claim 2 wherein said support comprises a projecting part (310) placed on the upper part of said support, said projecting part being configured to cooperate with one end of a transmission shaft (305) linked to said means for modifying the pose of a member in order to fasten said support to said means for modifying the pose of a member.

4. A set according to claim 3, wherein said projecting part comprises at least one protuberance (320) configured to cooperate with at least one open slot (315) of said end of said transmission shaft to hold said support in suspended disposition.

5. A set according to claim 3 or claim 4 further comprising a locking member (325) to rigidly keep said projecting part against said end of said transmission shaft.

6. A set according to any one of claims 3 to 5 further comprising rigidifying means cooperating with part of said transmission shaft to constrain the movement of said transmission shaft to at least one predetermined movement.

7. A set according to any one of claims 1 to 6 further comprising manipulation means (400) for said support, said manipulation means enabling said support to be coupled and uncoupled from said means for modifying the pose of a member without porterage of said support.

8. A method of assisting in the shooting of images of an object using a set for assisting in the shooting of images of an object, according to any one of claims 1 to 7, this method comprising the following steps:
- fastening (705) a mobile removable support on which is placed said object to said means for modifying the pose of a member of said set;
- obtaining (710) at least one image comprising at least part of said object and at least part of said support;
- estimating (715) the pose of said at least one object by analysis of said at least one obtained image; and
- controlling said means for modifying the pose of a member according to said estimated pose and a predetermined position.

9. A method according to claim 8, in which said controlling step comprises a step of sending (715) a command for modifying the pose of said support according to said estimated pose and a predetermined position.

10. A method according to claim 8 or claim 9 further comprising a step of storing (735) said at least one image obtained.

11. A method according to any one of claims 8 to 10 further comprising an initial step of obtaining (800) at least one reference image comprising at least part of said support, the pose of said support in said reference image being identical to that of said support in said at least one image comprising at least part of said object and at least part of said support, and a step of extracting (810) a representation of said object from said at least one image comprising at least part of said object and at least part of said support.

12. A method according to claim 11, further comprising a step of analyzing (825) said extracted representation of said object to distinguish the representation of said object from shadows of said object on said support.

13. A method according to claim 11 or claim 12 further comprising a step of merging (830) said extracted representation of said object in a photograph comprising a representation of a support of which the pose is identical to that of said support in said at least one image comprising at least part of said object and at least part of said support.

14. A computer program comprising instructions adapted for carrying out each of the steps of the method according to any one of claims 8 to 13 when said program is executed on a computer.
